# EUROPÄISCHE PATENTSCHRIFT

(11) **EP 0 457 753 B1**
(45) Veröffentlichungstag und Bekanntmachung des Hinweises auf die Patenterteilung: **19.01.1994**
(21) Anmeldenummer: 91890097.8
(22) Anmeldetag: 07.05.1991
(51) Int. Cl.: F02D 13/02

(54) **Zweitakt-Brennkraftmaschine**
Two cycles engine
Moteur à deux temps

(30) Priorität: 15.05.1990 AT 1069/90
(43) Veröffentlichungstag der Anmeldung: 21.11.1991
(73) Patentinhaber: Sterbenz, Albin, A-8041 Graz (AT); Laimböck, Franz, Dipl.Ing.Dr., A-8051 Graz-Thal (AT)
(72) Erfinder: Sterbenz, Albin, A-8041 Graz (AT); Laimböck, Franz, Dipl.Ing.Dr., A-8051 Graz-Thal (AT)
(74) Vertreter: Hübscher, Heiner, Dipl.-Ing.

(56) Entgegenhaltungen:
- EP-A- 0 210 829
- EP-A- 0 246 877
- WO-A-89/02518

## Beschreibung

Die Erfindung bezieht sich auf eine Zweitakt-Brennkraftmaschine mit Kurbelgehäusespülung und einem von einem Auslaßfenster in der Zylinderwand ausgehenden Auslaßkanal, in dem ein die Lichtweite des Auslaßfensters in Kolbenhubrichtung in Abhängigkeit von einem oder mehreren Betriebsparametern der Brennkraftmaschine, insbesondere der Drehzahl, verstellender Steuerkörper angeordnet ist.

Zweitakt-Brennkraftmaschinen dieser Art sind bereits bekannt (GB-PS 2 177 755, US-PS 4 516 540 und US-PS 4 768 473). Dabei ist der Steuerkörper aber so angeordnet bzw. ausgebildet, daß er den kurbelfernen Rand des Auslaßfensters verstellt, um die jeweiligen Auslaßsteuerzeiten drehzahlabhängig zu verlängern oder zu verkürzen und damit eine Anpassung an die Betriebsverhältnisse zu erreichen. Es ist auch schon bekannt (GB-PS 2 177 755), außer einem Hauptauslaßkanal zwei Seitenauslaßkanäle vorzusehen und eine nach außen abgeschlossene, zur Auspuffanlage zuschaltbare Luftkammer anzuordnen, wobei der Steuerkörper zugleich zum fallweisen Abschließen der Seitenauslaßkanäle und der Luftkammer dient. Dadurch soll die Öffnungsdauer des Hauptauslaßkanals und der Seitenauslaßkanäle bei niedrigen Drehzahlen verringert und bei hohen Drehzahlen durch Freigabe der gesamten Kanalquerschnitte und Verschließen der Luftkammer die Leistung verbessert werden. Spülverluste lassen sich auf diese Weise aber nicht vermindern.

Für Brennkraftmaschinen, bei denen die schädlichen Abgasemissionen auf ein Minimum herabgesetzt sind und bei denen auch Auspuffanlagen mit Katalysator Verwendung finden können, ist es wesentlich, eine möglichst geringe Rohemission der Brennkraftmaschine zu erreichen. Gefordert werden demnach kleinstmögliche Spülverluste und die Fähigkeit der Brennkraftmaschine, auch sehr magere Gemische bei guten Laufverhältnissen verbrennen zu können.

Der Erfindung liegt somit die Aufgabe zugrunde, die eingangs geschilderte Brennkraftmaschine so zu verbessern, daß diese Forderungen erfüllt sind.

Die Erfindung löst die gestellte Aufgabe dadurch, daß der dem Strömungsverlauf angepaßte Steuerkörper den mit seiner Hilfe verstellbaren kurbelseitigen Rand des Auslaßfensters bildet.

Im unteren Drehzahl- bzw. Lastbereich der Brennkraftmaschine wird der kurbelseitige Rand des Auslaßfensters in Richtung zum Brennraum hin, also von der Kurbelwelle weg verlagert und so das Auslaßfenster verkleinert. Dies führt zu einer günstigen Beeinflussung des Ladungswechsels, woraus sich wiederrum geringere Spülverluste ergeben. Dadurch wird eine deutliche Abmagerung des zugeführten Luft-Kraftstoffgemisches ermöglicht, ohne das Laufverhalten der Brennkraftmaschine ungünstig zu beeinflussen, d. h. zyklische Schwankungen, Aussetzer od. dgl. hervorzurufen. Daraus ergeben sich dann geringere Konzentrationen von unverbrannten Kohlenwasserstoffen in den noch vorhandenen Spülverlusten, was eine Verbesserung des Kraftstoffverbrauches mit sich bringt. Durch die Verlagerung des kurbelseitigen Randes des Auslaßfensters von der Kurbelseite her gegen den Brennraum zu wird nicht die Steuerzeit, sondern nur der dem jeweiligen Kurbelwinkel zugehörige Querschnitt des Auslaßkanals, also der sogenannte Zeitquerschnitt verstellt. Da der Steuerkörper dem Strömungsverlauf angepaßt ist, werden die Strömungsverhältnisse in dem auf das Auslaßfenster folgenden Bereich möglichst wenig beeinträchtigt.

Handelt es sich um eine Brennkraftmaschine, bei der der Auslaßkanal aus einem Hauptauslaßkanal und zwei an je ein Auslaßfenster anschließenden Seitenauslaßkanälen besteht, können diese mit Hilfe des Steuerkörpers in seiner kurbelfernen Endstellung verschließbar sein. Dadurch lassen sich das Abgasverhalten und die Laufeigenschaften der Brennkraftmaschine im unteren Drehzahl- bzw. Lastbereich weiterhin verbessern. Die Wirkung des Steuerkörpers kann verbessert werden, wenn ein Rückladen von in der Auspuffanlage befindlichem Frischgas auch im unteren Drehzahlbereich erfolgt. Der Steuerkörper ist daher bei Anordnung einer nach außen abgeschlossenen, zur Auspuffanlage zuschaltbaren Luftkammer mit deren Schließvorrichtung im Sinne eines Öffnens bei Steuerkörperverstellung zur kurbelfernen Endstellung gekuppelt. Befindet sich also der kurbelseitige Rand des Auslaßfensters in seiner kurbelfernen Endstellung, so wird die Luftkammer freigegeben, wodurch sich eine Anhebung des Drehmomentes und eine weitere Verringerung der Abgasemissionen erzielen läßt.

In der Zeichnung ist der Erfindungsgegenstand in einem Ausführungsbeispiel dargestellt, und zwar zeigen
- Fig. 1: eine Zweitakt-Brennkraftmaschine mit Kurbelgehäusespülung im quer zur Kurbelwelle durch die Zylinderachse geführten Längsschnitt bei in seiner kurbelfernen Endstellung befindlichem Steuerkörper,
- Fig. 2: die erfindungswesentlichen Teile in der Steuerkörperstellung für höheren Drehzahl- bzw. Lastbereich in gleicher Darstellungsweise,
- Fig. 3: einen zugehörigen Querschnitt nach der Linie III-III der Fig. 1

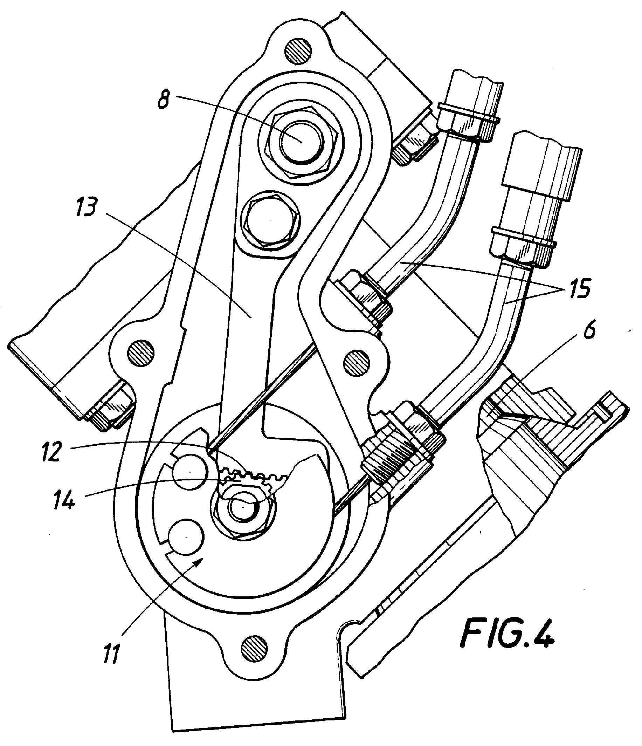

- Fig. 4: die zur Kupplung des Steuerkörpers mit der Schließvorrichtung der Luftkammer dienenden Konstruktionsteile in größerem Maßstab in Außenansicht.

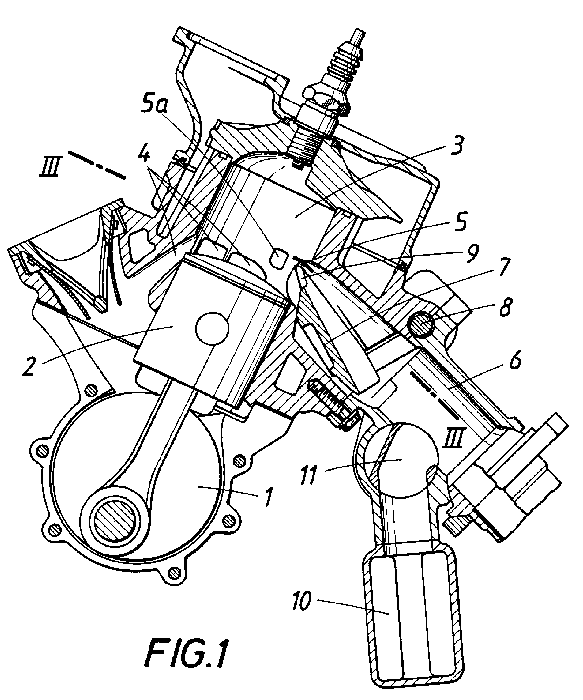

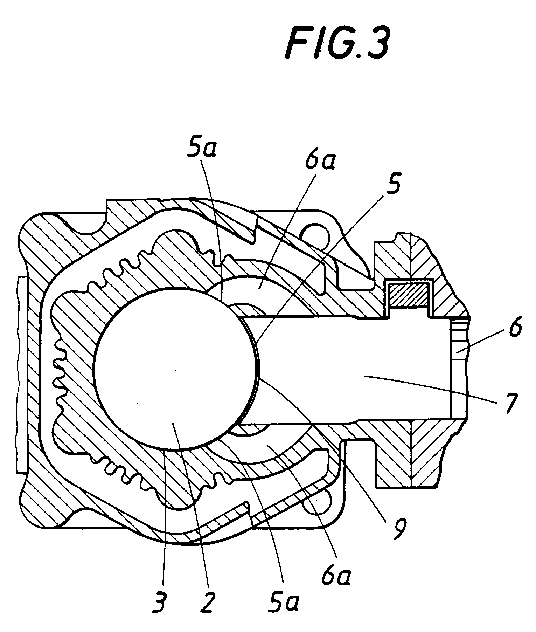

Die erfindungsgemäße Zweitakt-Brennkraftmaschine weist eine Kurbelwelle 1 mit Kolben 2 und einen Zylinder 3 auf, wobei vom Kurbelgehäuse Überströmkanäle 4 für das Luft-Kraftstoffgemisch in den Zylinder 3 führen. Von einem Auslaßfenster 5 in der Zylinderwand geht ein Auslaßkanal 6 aus, in dem ein dem Strömungsverlauf angepaßter Steuerkörper 7 mittels einer Welle 8 zur Verlagerung des kurbelseitigen Randes 9 des Auslaßfensters 5 in Kolbenhubrichtung verstellbar gelagert ist. Wie sich insbesondere aus Fig. 3 ergibt, besteht der Auslaßkanal aus einem Hauptauslaßkanal 6 und zwei an je ein eigenes Auslaßfenster 5a anschließenden Seitenauslaßkanälen 6a, die mit Hilfe des Steuerkörpers 7 in seiner kurbelfernen Endstellung gemäß den Fig. 1 und 3 verschließbar sind.

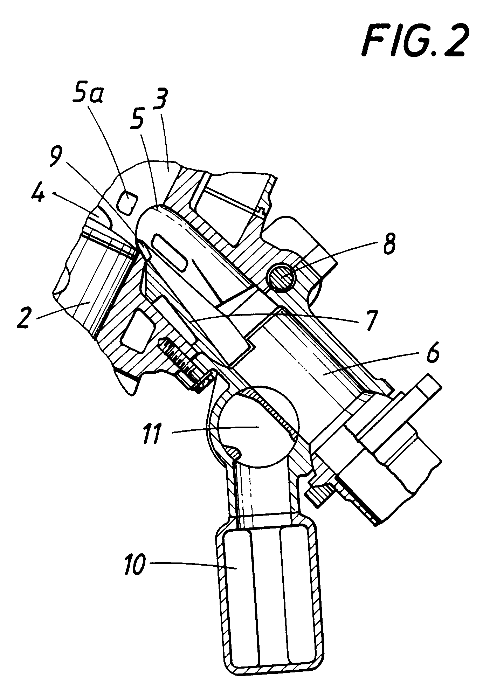

Die Auspuffanlage der Brennkraftmaschine weist eine nach außen abgeschlossene zuschaltbare Luftkammer 10 auf, die mittels eines Drehschiebers 11 verschlossen bzw. zum Auslaßkanal 6 hin geöffnet werden kann. Dabei ist die Welle 8 für den Steuerkörper 7 über eine in ein Zahnsegment 12 auslaufende Stange 13 mit einem Zahnrad 14 auf der Welle des Drehschiebers 11 gekuppelt. Die Anordnung ist, wie sich aus den Fig. 1 und 2 ergibt so getroffen, daß der Drehschieber 11 bei in seiner kurbelfernen Endstellung befindlichem Steuerkörper 7 (Fig. 1) geöffnet und bei das Auslaßfenster 5 voll freigebendem Steuerkörper 7 (Fig. 2) geschlossen ist. Die Verdrehung des Drehschiebers 11 erfolgt mit Hilfe von Bowdenzügen 15 von einem Stellmotor her.

## Patentansprüche

1. Zweitakt-Brennkraftmaschine mit Kurbelgehäusespülung und einem von einem Auslaßfenster (5) in der Zylinderwand ausgehenden Auslaßkanal (6), in dem ein die Lichtweite des Auslaßfensters (5) in Kolbenhubrichtung in Abhängigkeit von einem oder mehreren Betriebsparametern der Brennkraftmaschine insbesondere der Drehzahl, verstellender Steuerkörper (7) angeordnet ist, dadurch gekennzeichnet, daß der dem Strömungsverlauf angepaßte Steuerkörper (7) den mit seiner Hilfe verstellbaren kurbelseitigen Rand (9) des Auslaßfensters (5) bildet.

## Claims

1. A two-stroke internal combustion engine with crankcase scavenging and an exhaust duct (6) extending from an exhaust port (5) in the cylinder wall, said duct containing a control member (7) which adjusts the clearance of the exhaust port (5) in the direction of the piston stroke in dependence on one or more operating parameters of the internal combustion engine, more particularly the speed, characterised in that the control member (7), which is adapted to the flow configuration, forms that edge (9) of the exhaust port (5) which is adjacent the crank and which is adjustable with the aid of said control member (7).

## Revendications

1. Moteur à combustion interne avec balayage du carter de vilebrequin et un canal d'échappement (6), partant d'une fenêtre d'échappement (5) ménagée dans la paroi du cylindre et dans lequel est disposé un corps de commande (7) modifiant en vue d'un réglage la largeur libre de la fenêtre d'échappement (5) dans la direction de la course du piston, en fonction d'un ou de plusieurs paramètres de fonctionnement du moteur à combustion interne,
caractérisé en ce que le corps de commande (7), adapté à la géographie de l'écoulement, forme le bord (9) côté vilebrequin, réglable avec son aide, de la fenêtre d'échappement (5).
